# EUROPÄISCHE PATENTSCHRIFT

(11) **EP 2 456 943 B1**
(45) Veröffentlichungstag und Bekanntmachung des Hinweises auf die Patenterteilung: **25.01.2017**
(21) Anmeldenummer: 10736986.0
(22) Anmeldetag: 15.07.2010
(51) Int. Cl.: E06B 3/673, E06B 3/663

(54) **VERFAHREN ZUM HERSTELLEN EINER ISOLIERGLASSCHEIBE**
METHOD FOR PRODUCING AN INSULATING GLASS PANE
PROCÉDÉ DE FABRICATION DE VITRAGE ISOLANT

(30) Priorität: 24.07.2009 DE 102009035002
(43) Veröffentlichungstag der Anmeldung: 30.05.2012
(73) Patentinhaber: Bystronic Lenhardt GmbH, 75242 Neuhausen-Hamberg (DE)
(72) Erfinder: SCHULER, Peter, 75233 Tiefenbronn (DE)
(74) Vertreter: Twelmeier Mommer & Partner
(86) Internationale Anmeldenummer: PCT/EP2010/004302
(87) Internationale Veröffentlichungsnummer: WO 2011/009554

(56) Entgegenhaltungen:
- EP-A1- 0 823 318
- EP-A2- 0 805 254
- WO-A1-90/02696
- WO-A1-91/06740

## Beschreibung

Die Erfindung betrifft ein Verfahren zum Herstellen einer Isolierglasscheibe mit einem plastischen Abstandhalter, in welcher zwei zueinander parallele Glastafeln einen Sollabstand voneinander haben, und eine Düse zur Verwendung in diesem Verfahren.

Ein solches Verfahren ist aus der DE 35 39 877 A1 bekannt. Gemäß dem bekannten Verfahren können zwei Glastafeln dadurch zu einer Isolierglasscheibe verbunden werden, dass man in den Zwischenraum zwischen den beiden auf Abstand gehaltenen Glastafeln längs des gesamten Glastafelrandes einen zweischichtigen Verbundstrang aus zwei unterschiedlichen Substanzen spritzt, wobei sich die beiden miteinander verbundenen Teilstränge jeweils von der einen bis zur anderen Glastafel erstrecken, so dass man einen inneren Teilstrang mit einer dem Innenraum der Isolierglasscheibe zugewandten Oberfläche und einen äußeren Teilstrang mit einer der Außenluft zugewandten Oberfläche hat. Von den beiden Teilsträngen besteht einer aus einer Substanz, die in erster Linie für den nötigen festen Verbund der beiden Glastafeln sorgt (zumeist ein aushärtender Zweikomponentenkleber, insbesondere ein Thiokol), während der andere Teilstrang für einen wasserdampfdichten Verschluss der Isolierglasscheibe sorgen soll und z. B. aus einem Polyisobutylen besteht. Der innere Teilstrang enthält darüber hinaus ein körniges oder pulveriges Trockenmittel, insbesondere Molekularsiebe, welches im Inneren der Isolierglasscheibe vorhandene Feuchtigkeit zu binden vermag.

Nach der Offenbarung in der DE 35 39 877 A1 kann ein solcher Verbundstrang mit einer Düse erzeugt werden, welche zwei dicht benachbarte Austrittsöffnungen hat, denen die unterschiedlichen Substanzen durch gesonderte Zuführkanale zugeführt werden, oder durch eine Düse, welche zwar nur eine einzige Austrittsöffnung aufweist, in welche jedoch zwei Zuführkanäle für die beiden unterschiedlichen Substanzen münden. In beiden Fällen taucht gemäß der Offenbarung in der DE 35 39 877 A1 die Düse in den Zwischenraum zwischen den beiden parallel zueinander mit Abstand angeordneten Glastafeln ein und ihre Mündung ist der Bewegungsrichtung der Düse entgegengerichtet.

Die DE 35 39 877 A1 offenbart auch eine Handhabungsvorrichtung, mit der die Düse und das Glastafelpaar relativ zueinander bewegt werden. Dabei handelt es sich um einen Waagerechtförderer, welcher das Glastafelpaar hochkant stehend fördert und dabei die Glastafeln in einem vorbestimmten Abstand hält. An dem Waagerechtförderer ist die Düse angebracht, die parallel zur Scheibenlaufebene quer zur Förderrichtung verfahrbar und um eine zur Scheibenlaufebene senkrechte Achse fortschreitend um jeweils 90° schwenkbar ist.

Das Einspritzen des Verbundstranges beginnt an einer Ecke der rechtwinkligen Glastafeln und endet an derselben Ecke. Beim Erreichen der anderen drei Ecken wird die Düse jeweils um 90° verschwenkt. Beim Einspritzen des Stranges entlang den beiden zur Förderrichtung parallelen Scheibenrändern ruht die Düse, während das Glastafelpaar durch den Waagerechtförderer bewegt wird. Beim Einspritzen des Stranges entlang den beiden quer zur Förderrichtung verlaufenden Scheibenrändern ruht das Glastafelpaar, während die Düse bewegt wird.

Eine besonders kritische Stelle für die Dichtheit der Isolierglasscheibe befindet sich an jener Ecke, an welcher der Anfang und das Ende des Verbundstranges liegen. Die unvermeidbare Fuge zwischen den beiden Enden des Stranges wasserdampflicht zu verschließen, ist nicht einfach, insbesondere nicht bei Glastafeln mit einer gerundeten oder in anderer Weise von der Rechtwinkligkeit abweichenden Umrissgestalt.

In der WO 90/02696 A1 ist ein Zusammenbauen von zwei Glastafeln zu einer Isolierglasscheibe nach dem Oberbegriff des Anspruchs 1 beschrieben, bei welchem die beiden Glastafeln in vorgegebenem Abstand voneinander und parallel zueinander angeordnet sind, ohne dass sich zwischen ihnen irgendwelche Abstandhalter befinden. Längs ihres Randes wird zwischen sie ein endloser Strang aus einer zunächst pastösen und anschließend erstarrenden, an beiden Glastafeln anhaftenden Masse eingespritzt, wobei sie gemeinsam synchron, ohne dass zwischen ihnen eine Relativbewegung auftritt, um eine die Glastafeloberflächen durchsetzende Achse gedreht werden. Jede der Glastafeln wird in einer Saugvorrichtung gehalten, welche drehbar am Ende eines dreidimensional bewegbaren Roboterarms angebracht ist. Es ist eine ortsfest im Raum angeordnete Düse zum Einspritzen eines aus zwei Teilsträngen bestehenden Verbundstrangs in den Zwischenraum zwischen den beiden Glastafeln vorgesehen, an welcher die Glastafeln mit ihrem Rand synchron zueinander durch eine entsprechende Bewegung der Roboterarme entlangbewegt werden.

Die WO 91/06740 offenbart einen Vorschlag, wie man beim Extrudieren eines Verbundstranges zwischen zwei auf Abstand gehaltene Glastafeln den dichten Anschluss zwischen Anfang und Ende des Verbundstranges verbessern kann.

Wegen technologischer Schwierigkeiten haben Verfahren und Vorrichtungen zum Herstellen von Isolierglasscheiben durch Extrudieren eines Verbundstranges zwischen zwei zueinander parallele, auf Abstand gehaltene Glastafel, in denen der Verbundstrang sowohl als Abstandhalter als auch zum Abdichten der Isolierglasscheibe dient, keinen Eingang in die Praxis gefunden.

In die Praxis Eingang gefunden hat das in der WO 96/09456 A2 offenbarte Verfahren, in welchem ein plastischer Strang, insbesondere auf der Basis eines Polyisobutylens, in welches ein pulveriges oder körniges Trockenmittel eingelagert ist, auf eine Glastafel aufgetragen wird, indem eine Düse längs des Randes der Glastafel um diese herum bewegt wird und dabei den aus der Düse austretenden Strang auf die Glastafel so ablegt, dass Anfang und Ende des Strangs zusammenstoßen. Die so vorbereitete Glastafel wird mit einer zweiten Glastafel zu einer Isolierglasscheibe zusammengefügt, in welcher der plastische Strang mit beiden Glastafeln verklebt ist. Die Stoßfläche zwischen Anfang und Ende des Strangs verläuft dabei schräg zur Längsrichtung des Strangs von der einen Glastafel bis zur anderen Glastafel und wird, wenn die Isolierglasscheibe auf ihr Sollmaß verpresst wird, mit dem Pressdruck beaufschlagt. Anschließend wird die verbleibende Randfuge, wie bei Isolierglasscheiben mit metallischen Abstandhaltern an sich bekannt, mit einer abbindenden Dichtmasse versiegelt, z. B. mit einem Thiokol. Thiokol ist ein Polysulfid. Hat die in die Randfuge eingespritzte Dichtmasse abgebunden, stellt sie den festen Verbund zwischen den beiden Glastafeln der Isolierglasscheibe her. Bis dahin dient die thermoplastische Dichtmasse, in welchem das Trockenmittel eingelagert ist, zugleich als Abstandhalter.

Verbesserungen des in der WO 96/09456 A2 beschriebenen Verfahrens sind in der EP 0 805 254 A2, in der EP 0 823 318 B1 und in der EP 0 823 531 B1 offenbart. Isolierglasscheiben, die nach diesem Verfahren hergestellt werden, sind als TPS®-Isolierglasscheiben bekannt.

Die vorliegende Erfindung bringt nach nunmehr 15 Jahren einen bedeutenden Fortschritt in der Herstellung von TPS®-Isolierglasscheiben. Dieser Fortschritt wird durch das Verfahren mit den im Patentanspruch 1 angegebenen Merkmalen und durch die Düse mit den im Patentanspruch 18 angegebenen Merkmale erzielt. Vorteilhafte Weiterbildungen der Erfindung sind Gegenstand der Unteransprüche.

Eine Isolierglasscheibe mit einem plastischen Abstandhalter, in welcher zwei zueinander parallele Glastafeln einen Sollabstand voneinander haben, wird erfindungsgemäß hergestellt durch Bilden eines Verbundstranges vor dem Zusammenfügen der beiden Glastafeln, durch zeitlich und räumlich überlappendes Extrudieren von wenigstens zwei plastischen Teilsträngen, von welchen ein erster Teilstrang aus einer klebenden ersten Dichtmasse, in welche eine Feuchtigkeit bindende Substanz eingelagert ist, und ein zweiter Teilstrang aus einer klebenden und abbindenden zweiten Dichtmasse besteht, auf eine erste Glastafel entlang des Randes der Glastafel, und zwar in der Weise, dass Anfang und Ende des Verbundstrangs zusammenstoßen und dadurch einen Rahmen bilden, dass eine Düse mit veränderbarem Mündungsquerschnitt verwendet wird,um den ersten Teilstrang mit einer vorgegebenen ersten Solldicke, welche größer ist als der Sollabstand, und den zweiten Teilstrang mit einer vorgegebenen zweiten Solldicke, welche größer ist als der Sollabstand, auf die Glastafel zu extrudieren dass die Teilstränge in dem Verbundstrang nebeneinander liegen und dabei unmittelbar aneinander anschließen, und dass der erste Teilstrang innerhalb des von dem zweiten Teilstrang gebildeten Rahmens liegt, nach dem Extrudieren des Verbundstrangs auf die erste Glastafel, Zusammenfügen der ersten Glastafel mit der zweiten Glastafel so, dass der Verbundstrang zwischen den beiden Glastafeln liegt, sie miteinander verbindet und auf Abstand voneinander hält, und Einstellen des Sollabstandes durch Pressen der zusammengefügten Glastafeln.

Die Erfindung hat wesentliche Vorteile:
- Anders als beim herkömmlichen Verfahren zum Bilden von TPS®-Isolierglasscheiben wird nicht nur ein Strang aus einer thermoplastischen Masse, in welche eine Feuchtigkeit bindende Subtanz eingelagert, auf eine erste Glastafel aufgetragen, um diese dann mit einer zweiten Glastafel zu einer Isolierglasscheibe zu verbinden, die dann hernach mit einer abbindenden zweiten Dichtmasse versiegelt werden muss. Erfindungsgemäß wird vielmehr auf die erste Glastafel ein Verbundstrang aufgetragen, welcher einen ersten Teilstrang aus einer klebenden ersten Dichtmasse aufweist, in welcher eine Feuchtigkeit bindende Substanz eingelagert ist, und welcher einen zweiten Teilstrang aus einer klebenden und abbindenden zweiten Dichtmasse aufweist. Deshalb kann ein gesonderter Versiegelungsvorgang, in welchem bei herkömmlichen TPS®-Isolierglasscheiben erst nach dem Zusammenfügen von zwei Glastafeln zu einer Isolierglasscheibe die abbindende zweite Dichtmasse in einer Randfuge der Isolierglasscheibe eingefüllt wird, entfallen.
- Die Versiegelungsmaschine, welche in einer herkömmlichen Fertigungslinie für TPS®-Isolierglasscheiben die aufwendigste Maschine ist, kann entfallen. Vorrichtungen zum Aufbereiten und Zuführen der abbindenden zweiten Dichtmasse werden jedoch auch für das Durchführen des erfindungsgemäßen Verfahrens benötigt.
- Es entfällt die Stellfläche für eine Versiegelungsmaschine in der Isolierglasfertigungslinie.
- Die erste und die zweite Dichtmasse werden in einem gemeinsamen Arbeitsgang aufgetragen.
- Der Verbundstrang zeichnet sich schon vor dem Zusammenfügen von zwei Glastafeln zu einer Isolierglasscheibe durch eine größere mechanische Stabilität aus als ein herkömmlicher TPS®-Strang, der nur aus einer thermoplastischen ersten Dichtmasse besteht, in welche eine Feuchtigkeit bindende Substanz eingelagert ist. In dem Verbundstrang können sich die beiden Teilstränge gegenseitig stützen. Deshalb können nach dem erfindungsgemäßen Verfahren Isolierglasscheiben hergestellt werden, in denen der Abstand der beiden aneinander gegenüberliegenden Glastafeln größer ist als bei herkömmlichen TPS®-Isolierglasscheiben. In erfindungsgemäß hergestellten Isolierglasscheiben kann der Abstand zwischen zwei einander gegenüberliegenden Glastafeln in der Isolierglasscheibe deutlich mehr als 20 mm betragen. Solche Isolierglasscheiben bewirken verglichen mit herkömmlichen TPS®-Isolierglasscheiben eine verbesserte Wärmedämmung.
- Eine aus zwei Komponenten bestehende, abbindende Dichtmasse kann mit niedrigerer Temperatur auf eine Glastafel aufgetragen werden, als eine thermoplastische erste Dichtmasse, in welcher eine Feuchtigkeit bindende Substanz eingelagert ist. Im Verbundstrang findet deshalb ein Temperaturausgleich statt, der dazu führt, dass der erste Teilstrang anfänglich schneller abkühlt und dadurch an Festigkeit gewinnt, wohingegen die zweite Dichtmasse schneller abbindet. Beides führt in Kombination zu einer raschen mechanischen Stabilisierung des Verbundstrangs, welcher für das Erzielen großer Abstände zwischen den Glastafeln einer Isolierglasscheibe günstig ist.
- Nach dem erfindungsgemäßen Verfahren lassen sich Isolierglasscheiben mit plastischem Abstandhalter preiswerter herstellen als bisher.
- Der Randverbund einer erfindungsgemäß hergestellten Isolierglasscheibe hat keinen metallischen Abstandhalter, welcher in klassischen Isolierglasscheiben eine unerwünschte Kältebrücke dargestellt.
- Das erfindungsgemäße Verfahren eignet sich für unterschiedliche abbindende, d. h. vernetzende, zweite Dichtmassen. Neben dem bislang am meisten verwendeten Thiokol kann als zweite Dichtmasse auch ein Polyurethan, ein Silikon oder ein reaktiver Schmelzkleber (Hotmelt) verwendet werden, insbesondere ein reaktives Holtmelt auf Butylbasis. Als reaktive Komponente des Hotmelts eignet sich z. B. ein Isocyanat, welches in Form von Prepolymeren im Holtmelt enhalten ist und durch Reaktion mit einwandernder Feuchtigkeit vernetzt. Als erste Dichtmasse eignet sich für Zwecke der Erfindung insbesondere eine Masse auf der Basis von Polyisobutylen, in welche ein pulveriges Trockenmittel, insbesondere Molekularsiebe, eingelagert ist. Auch die erste Dichtmasse enthält vorzugsweise eine reaktive, d. h. vernetzende, Komponente. Deren Anteil beträgt vorzugsweise 30 Gew.-% oder etwas mehr als 30 Gew.-%. Der Grad der Vernetzung soll bei der ersten Dichtmasse jedoch geringer sein als bei der zweiten Dichtmasse.

Vorzugsweise wird der Verbundstrang aus genau zwei Teilsträngen gebildet. Es besteht aber auch die Möglichkeit, dass zwischen dem ersten Teilstrang und dem zweiten Teilstrang eine Diffusionsbarriere eingefügt wird. Eine solche Diffusionsbarriere zwischen dem ersten und dem zweiten Teilstrang ermöglicht es, für den ersten Teilstrang und für den zweiten Teilstrang auch solche Substanzen zu verwenden, die zwar für ihren individuellen Hauptzweck, der beim ersten Teilstrang darin besteht, die Isolierglasscheibe abzudichten und beim zweiten Teilstrang darin besteht, einen festen Verbund zwischen den Glastafeln der Isolierglasscheibe herzustellen, optimal sind, aber in direktem Kontakt nicht miteinander verträglich sind. Eine Diffusionsbarriere kann dadurch gebildet werden, dass zwischen dem ersten Teilstrang und dem zweiten Teilstrang durch Koextrusion ein dritter Teilstrang aus einer dritten plastischen Masse gebildet wird, welche sowohl mit der ersten plastischen Masse als auch mit der zweiten plastischen Masse kompatibel ist.

Der Sollabstand der Glastafeln einer erfindungsgemäßen Isolierglasscheibe soll durch Pressen der Isolierglasscheibe erfolgen. Dadurch wird zugleich die Abdichtung der Isolierglasscheibe verbessert. Beim Pressen wird der Verbundstrang gestaucht. Um zu vermeiden, dass es in dem Gas, mit welchem die Isolierglasscheibe gefüllt ist, zu einer Druckerhöhung kommt, wird vor dem Zusammenfügen der beiden Glastafeln zur Isolierglasscheibe eine der beiden Glastafeln vorzugsweise an einer Ecke von der gegenüberliegenden anderen Glastafel weggebogen und wird beim Zusammenfügen und Pressen gebogen gehalten, so dass zwischen dem Verbundstrang und der weg gebogenen Glastafel eine Öffnung bleibt, durch welche ein Druckausgleich stattfinden kann. Erst wenn die beiden Glastafeln abseits des gebogenen Bereichs den Sollabstand erreicht haben, wird die Biegung wieder rückgängig gemacht und damit die Isolierglasscheibe vollständig geschlossen. Bei dem von der Isolierglasscheibe eingeschlossenen Gas kann es sich um Luft oder um ein von Luft verschiedenes Gas handeln, welches schwerer ist als Luft, z. B. Argon.

Vorzugsweise werden die Teilstränge des Verbundstranges zeitgleich extrudiert, d. h., für die Teilstränge beginnt die Extrusion gleichzeitig und sie endet für die Teilstränge auch gleichzeitig. Das erleichtert die Steuerung des Extrusionsvorgangs und die Bewegung einer oder mehrerer Extrusionsdüsen entlang des gesamten Randes der ersten Glastafel, insbesondere im Bereich von Ecken oder gekrümmten Randabschnitten der Glastafel. Wenn mehrere Düsen für das Extrudieren der Teilstränge vorgesehen sind, werden sie vorzugsweise gemeinsam relativ zu der ersten Glastafel bewegt, insbesondere auf einem gemeinsamen Träger, weil das für den Bewegungsablauf am einfachsten ist. Unter einer Bewegung einer Düse relativ zur ersten Glastafel wird nicht nur eine Bewegung einer Düse entlang einer ruhenden Glastafel verstanden, sondern auch eine Bewegung der Glastafel entlang einer ruhenden Düse. Insbesondere bei Glastafeln mit einem gekrümmten Randabschnitt kann die Relativbewegung zwischen der Düse und der Glastafel auch gleichzeitig die Bewegung der Glastafel und die Bewegung der Düse beinhalten.

Es ist möglich und vorteilhaft, die Teilstränge mittels einer Mehrfachdüse zu extrudieren, welche Anschlüsse für unterschiedliche plastische Massen hat. Diese Lösung wird gegenüber der Alternative, für das Extrudieren der Teilstränge mehrere Düsen vorzusehen, bevorzugt. Von den Anschlüssen für die erste Dichtmasse, für die zweite Dichtmasse und gegebenenfalls für eine dritte plastische Masse führen getrennte Kanäle zu einer gemeinsamen Mündung oder zu mehreren nebeneinander liegenden Mündungen der Düse. Beide Möglichkeiten haben ihre Vorteile. Wenn die Mehrfachdüse nur eine einzige Mündung hat, dann erleichtert das den Aufbau der Mehrfachdüse und das Zusammenführen der Teilstränge zu einem Verbundstrang, welches nach Möglichkeit lückenlos erfolgen sollte. Wenn die Mehrfachdüse jedoch mehrere nebeneinander liegende Mündungen aufweist, dann eröffnet das eine Möglichkeit, die verschiedenen Teilstränge getrennt zu kontrollieren, insbesondere mit Schiebern, mit welchen der Öffnungsquerschnitt der Mündungen verändert werden kann. Wenn die Düse nur eine einzige Mündung hat, dann kann mit einem einzigen Schieber, der Öffnungsquerschnitt dieser Düse für den Verbundstrang insgesamt geändert und dadurch steuernd auf den Extrusionsvorgang eingewirkt werden. Aber auch dann, wenn die Düse nur eine einzige Mündung hat, kann deren lichter Querschnitt durch zwei nebeneinander liegende, getrennt verstellbare Schieber so gesteuert werden, dass die beiden Teilstränge beim Extrudieren getrennt veränderbar sind.

Im Allgemeinen haben die plastischen Massen, welche für den ersten Teilstrang und für den zweiten Teilstrang infrage kommen, unterschiedliche Verarbeitungstemperaturen. Deshalb ist es zweckmäßig, sie in getrennten Kanälen zu den Mündungen oder - wenn nur eine einzige Mündung vorhanden ist - bis kurz vor die gemeinsame Mündung zu führen. Um auf den Weg bis zur Mündung die gewünschten Verarbeitungstemperaturen beizubehalten, sind, wenn eine Mehrfachdüse verwendet wird, vorzugsweise Maßnahmen getroffen, um den Wärmeübergang zwischen den Kanälen, die von den Anschlüssen zu der Mündung bzw. zu den Mündungen führen, zu erschweren. Diese Maßnahmen können z. B. darin bestehen, dass Wände zwischen den Kanälen aus einem die Wärme schlecht leitenden Kunststoff bestehen und/oder das die für einen Wärmetransport zur Verfügung stehenden massiven Querschnitte zwischen den Kanälen durch Hohlräume, die im Düsenkörper vorgesehen werden, oder durch luftoffene Ausschnitte oder Zwischenräume klein gehalten werden.

Es wird eine Düse bzw. eine Mehrfachdüse mit veränderbarem Mündungsquerschnitt verwendet und vorzugsweise wird der Mündungsquerschnitt in einer Zeitspanne am Anfang des Extrusionsvorganges und in einer Zeitspanne am Ende des Extrusionsvorganges so gesteuert, dass die Dicke des aus der Düse bzw. aus der Mehrfachdüse austretenden Verbundstrangs bzw. seiner Teilstränge am Anfang auf einer Strecke L von Null ausgehend oder von einer minimalen Dicke ausgehend auf die Solldicke gesteigert und komplementär dazu am Ende des Extrusionsvorgangs auf derselben Strecke L von der Solldicke auf Null verringert wird, so dass sich Anfang und Ende des Verbundstranges bzw. seiner Teilstränge auf dieser Strecke überlappen. Dadurch kommt man zu einer optimalen Abdichtung zwischen Anfang und Ende des Mehrfachstranges, die durch den nachfolgenden Pressvorgang noch verbessert wird, weil dabei die Stoßflächen zwischen Anfang und Ende des Verbundstranges bzw. seiner Teilstränge aufeinander gepresst werden. Details zu dieser bevorzugten Weiterbildung der Erfindung sind in der WO 96/09456 offenbart. Der Inhalt der WO 96/09456 A2 wird hiermit ausdrücklich in die Offenbarung der vorliegenden Erfindung einbezogen.
Weiterhin ist es bevorzugt, dass mit der Düse, bzw. mit der Mehrfachdüse zunächst ein Film aus der jeweiligen plastischen Masse auf die erste Glastafel aufgetragen wird, bevor die Dicke des aus der Düse bzw. Mehrfachdüse austretenden Verbundstranges bzw. der Teilstränge gemäß der vorhergehend erwähnten Weiterbildung der Erfindung (siehe Anspruch 11) auf die Solldicke gesteigert wird. Dieser Film beseitigt ein sonst mögliches Risiko einer kleinen Undichtigkeit am Beginn der wie eine Rampe ansteigenden Stoßfläche des Verbundstrangs bzw. seiner Teilstränge. Dieser Film kann sehr dünn sein, vorzugsweise wird er nicht dicker als 0,3 mm ausgebildet und ist vorzugsweise nicht mehr als einige wenige cm lang. Am besten wird der Film nur 0,1 mm bis 0,2 mm dick ausgebildet. Näheres zu den Vorteilen dieses Films und wie man ihn am einfachsten erzeugt, sind in der EP 0 823 531 B1 offenbart. Der Inhalt der EP 0 823 531 B1 wird hiermit ausdrücklich in die Offenbarung der vorliegenden Erfindung einbezogen.

Besonders vorteilhaft ist eine Weiterbildung der Erfindung, in welcher die Strecken L, auf welchen sich Anfang und Ende der einzelnen Teilstränge überlappen, in Längsrichtung des Verbundstranges gegeneinander versetzt sind. Die Stoßfläche zwischen Anfang und Ende des ersten Teilstranges fluchtet dann nicht mit der Stoßfläche zwischen Anfang und Endes des zweiten Teilstranges. Feuchtigkeit, welche sich in einem ungünstigen Fall entlang der Stoßfläche zwischen Anfang und Ende des zweiten Teilstranges ausbreiten könnte, würde dann auf eine massive Wand des ersten Teilstranges treffen, welcher die Feuchtigkeit bindende Substanz enthält, könnte aber nicht auf die Stoßfläche zwischen Anfang und Ende des ersten Teilstranges treffen.

Während die Stoßflächen zwischen Anfang und Ende der Teilstränge vorzugsweise gegeneinander versetzt sind, wird der Anfang der Filme aus den plastischen Massen der vorzugsweise an die gleiche Stelle am Umfang der Glastafel gelegt, so dass mit dem Auftragen der Filme und mit der Bewegung der dafür vorgesehenen Düsen bzw. der dafür vorgesehenen Mehrfachdüse gleichzeitig begonnen werden kann. Um dennoch zu einem Versatz zwischen den Stoßflächen zwischen Anfang und Ende der Teilstränge zu kommen, kann man mit Vorteil zwei Schieber nebeneinander vorsehen, welche die Öffnungsquerschnitte für die beiden Teilstränge entsprechend zeitlich versetzt vornehmen.

Die Teilstränge können auf die erste Glastafel extrudiert werden, während diese hochkant stehend und einige Grad gegen die Vertikale geneigt auf einem Waagerechtförderer angeordnet ist. So wird bei der Herstellung der bekannten TPS®-Isolierglasscheiben verfahren. In Weiterbildung der Erfindung können die Teilstränge auf die erste Glastafel extrudiert werden, während diese waagerecht liegt. Das ermöglicht die Herstellung von Isolierglasscheiben mit besonders großem Abstand zwischen den Glastafeln.

Vorzugsweise wird der Verbundstrang bzw. werden seine Teilstränge so auf die erste Glastafel aufgetragen, dass der Verbundstrang, jedenfalls außerhalb von Eckbereichen der ersten Glastafel, bündig mit dem Rand der ersten Glastafel abschließt. Dann ist das zur Verfügung stehende Format der Glastafeln optimal ausgenutzt. Es kommt als Vorteil hinzu, dass sich der Verbundstrang beim Pressen der Isolierglasscheibe etwas nach außen wölbt, wodurch sich ein Kantenschutz der Isolierglasscheiben ergibt, welcher deren spätere Handhabung erleichtert und das Risiko von Absplitterungen an den Glaskanten mindert.

Ausführungsbeispiele der Erfindung sind in den beigefügten Zeichnungen beschrieben. Gleiche oder einander entsprechende Teile sind in den Beispielen mit übereinstimmenden Bezugszahlen bezeichnet.
- Fig. 1: zeigt schematisch den Aufbau einer Vorrichtung zum Auftragen eines Verbundstranges auf eine Glastafel,
- Fig. 2: zeigt eine Düse für das Extrudieren eines Verbundstranges in einer Vorderansicht,
- Fig. 3: zeigt den Schnitt A-A durch die Düse aus Figur 2,
- Fig. 4: zeigt den Schnitt B-B durch die Düse in Figur 2,
- Fig. 5: die Düse aus Figur 2 in einer Draufsicht,
- Fig. 6 und Fig. 7: zeigen die Düse aus Figur 2 in unterschiedlichen Schrägansichten
- Fig. 8: zeigt als Detail einen vergrößerten Ausschnitt aus Figur 6, und zwar den Bereich der Mündung der Düse,
- Fig. 9: zeigt ein zweites Ausführungsbeispiel einer Düse für das Extrudieren eines Verbundstranges in einer Vorderansicht,
- Fig. 10: zeigt den Schnitt C-C durch die Düse aus Figur 9,
- Fig. 11: zeigt die Seitenansicht in Blickrichtung D auf die Düse aus Figur 9,
- Fig. 12: zeigt die Düse aus Figur 9 in einer Draufsicht,
- Fig. 13: zeigt den Schnitt E-E der Düse gemäß Figur 10,
- Fig. 14: zeigt die Düse aus Figur 9 beim Extrudieren eines Verbundstranges auf eine Glastafel,
- Fig. 15: zeigt die Düse aus Figur 14, ergänzt um einen Antrieb für den Schieber der Düse und um einen Winkelkodierer,
- Fig. 16: zeigt ein drittes Ausführungsbeispiel mit einem Düsenpaar beim Extrudieren eines Verbundstranges auf eine Glastafel, wobei die beiden Teilstränge des Verbundstranges einen Versatz aufweisen,
- Fig. 17: zeigt das Düsenpaar aus Figur 16 nach Abschluss des Extrusionsvorganges des ersten Teilstrangs und vor Erreichen der Rampe des zweiten Teilstrangs,
- Fig. 18: zeigt das Düsenpaar aus Figur 16 nach Abschluss des Extrusionsvorganges des ersten Teilstrangs und während der Bewegung entlang der Rampe des zweiten Teilstrangs,
- Fig. 19: zeigt die Düse aus Figur 16 am Ende des Extrudierens des zweiten Teilstranges des Verbundstranges,
- Fig. 20: zeigt eine Abwandlung für die Vorrichtung aus Figur 1, und
- Fig. 21: illustriert den Zusammenbau einer erfindungsgemäßen hergestellten Isolierglasscheibe.

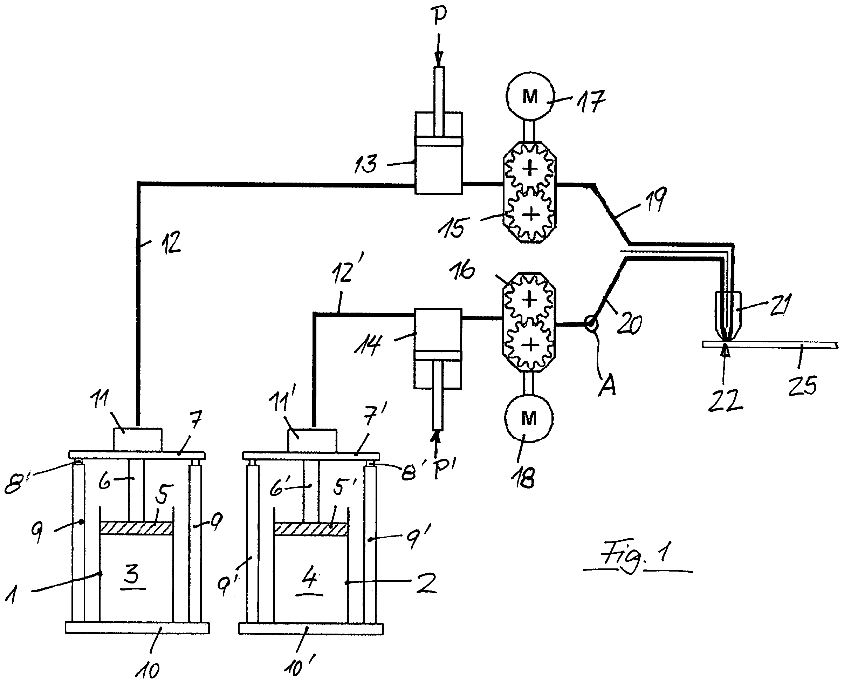

Figur 1 zeigt ein Gebinde 1 mit einer klebenden, thermoplastischen ersten Dichtmasse 3 und ein Gebinde 2 mit einer klebenden und abbindenden zweiten Dichtmasse 4. Die beiden Gebinde 1 und 2 sind z. B. Fässer, deren Deckel abgenommen sind. Auf der ersten Dichtmasse 3 im Gebinde 1 liegt eine Folgeplatte 5. Von der Folgeplatte führt eine Stange 6 senkrecht nach oben zu einer Traverse 7, welche nicht nur die Stange 6, sondern auch zwei Kolbenstangen 8 verbindet, welche zu zwei hydraulischen Zylindern 9 gehören, die auf einer Bodenplatte 10 verankert sind, auf welcher das Gebinde 1 steht. Durch Einziehen der Kolbenstangen 8 in den hydraulischen Zylinder 9 drückt die Traverse 7 die Folgeplatte 5 auf den im Gebinde befindlichen Vorrat der ersten Dichtmasse 3, welche durch eine Öffnung in der Folgeplatte 5 in eine oberhalb der Folgeplatte 5 befindliche Pumpe 11 gedrückt wird, die die erste Dichtmasse 3 in eine Leitung 12 fördert.

Die zweite Dichtmasse 4 befindet sich in dem zweiten Gebinde und wird aus diesem auf gleicher Weise herausgefördert wie die erste Dichtmasse 3 aus dem ersten Gebinde 1. Die dafür benutzten Einrichtungen sind deshalb mit denselben, mit einem Strich versehenden Bezugszahlen bezeichnet.

Die Fasspumpe 11 pumpt die erste Dichtmasse 3 in einen Zwischenspeicher 13, welcher unter dem einen Vordruck P steht und mit der Eingangsseite einer Zahnradpumpe 15 verbunden ist, welche durch einen Elektromotor 17, der vorzugsweise ein Gleichstrommotor ist, angetrieben wird.

Die zweite Dichtmasse 4 wird von der Fasspumpe 11' durch die Leitung 12' in einen Zwischenspeicher 14 gepumpt, welcher unter einem Vordruck P' steht und mit der Eingangsseite einer zweiten Zahnradpumpe 16 verbunden ist, welche durch einen Elektromotor 18 angetrieben wird. Die beiden Motoren 17 und 18 sind zweckmäßigerweise miteinander synchronisiert.

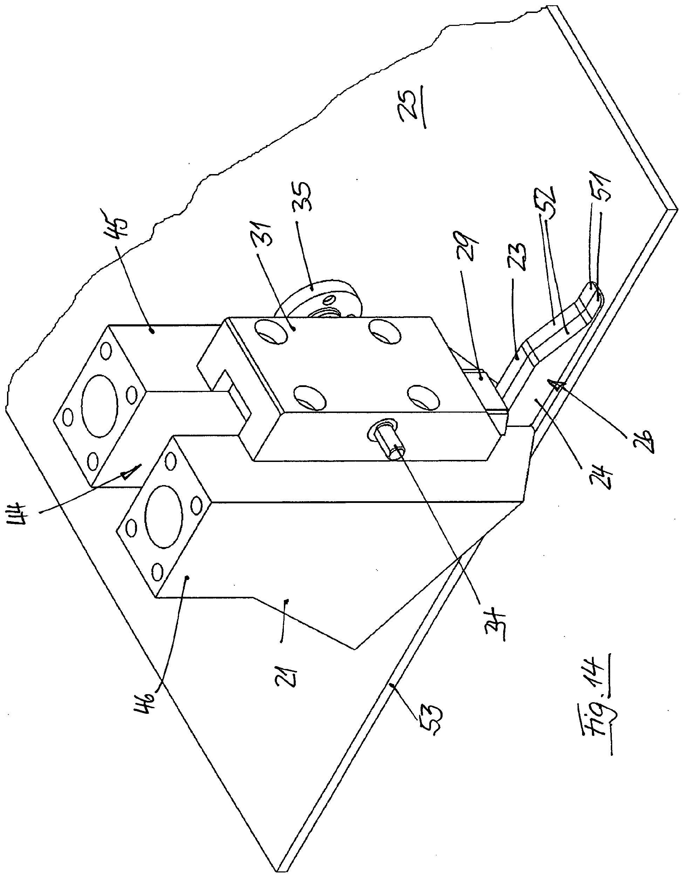

Die Zahnradpumpe 15 fördert die erste Dichtmasse 3 durch eine Leitung 19 in eine Düse 21. Die andere Zahnradpumpe 16 fördert die zweite Dichtmasse 4 durch eine Leitung 20 ebenfalls in die Düse 21, aus deren Mündung 22 zwei Teilstränge 23 und 24 (siehe Figur 14) austreten und unmittelbar nebeneinander auf eine Glastafel 25 aufgetragen werden, auf welcher sie einen Verbundstrang 26 bilden.

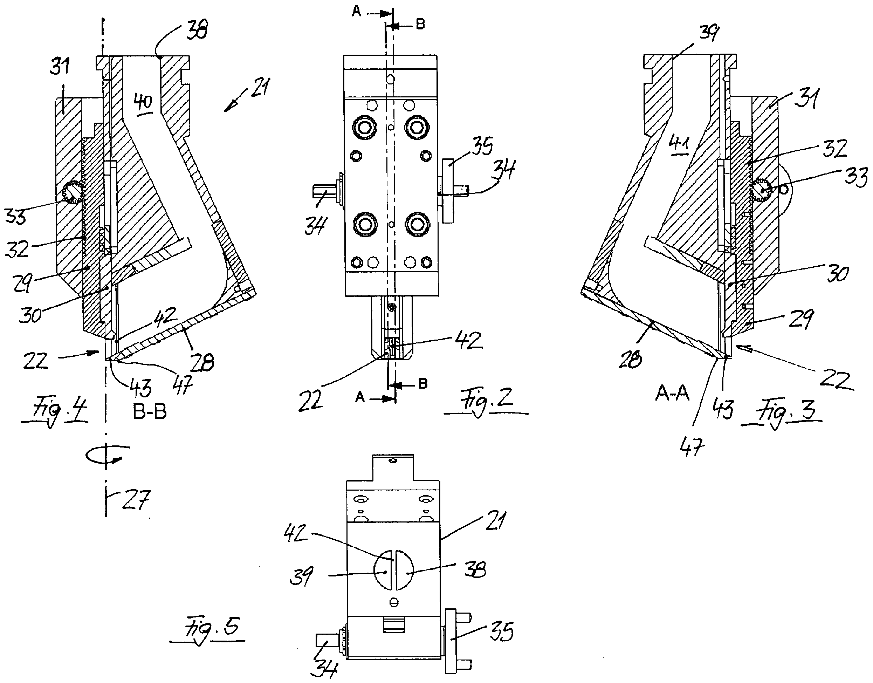

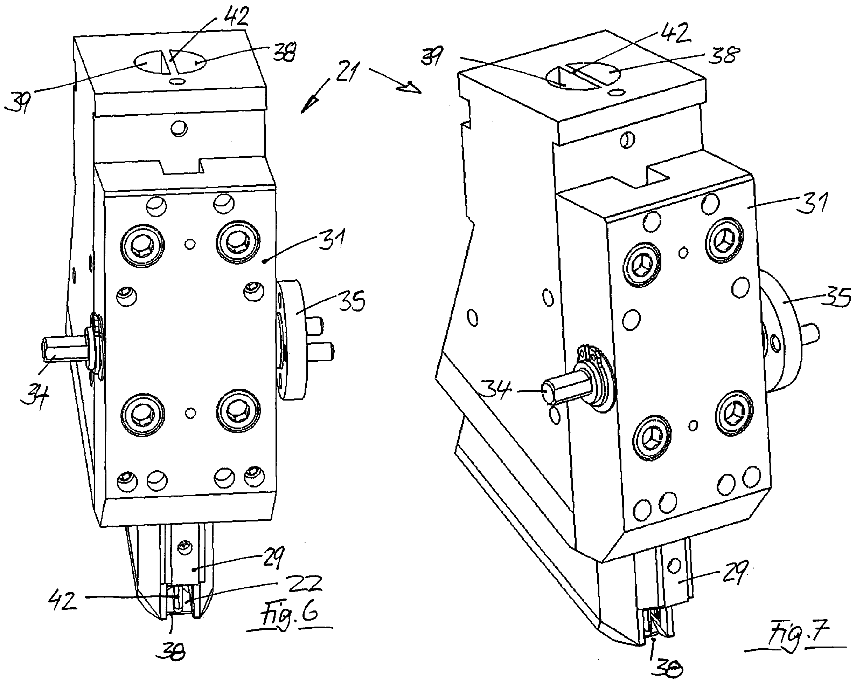

Die in den Figuren 2 bis 8 dargestellte Düse 21 ist an einem nicht dargestellten Träger angebracht, welcher um eine Achse 27 drehbar ist. Die Düse 21 hat einen schräg zur Drehachse 27 verlaufenden Boden 28, welche an der Drehachse 27 endet und den unteren Rand der Mündung 22 der Düse 21 begrenzt. Die Mündung 22 hat einen im Wesentlichen rechteckigen Öffnungsquerschnitt. Die Drehachse 27 verläuft in der Mitte der Mündung 22.

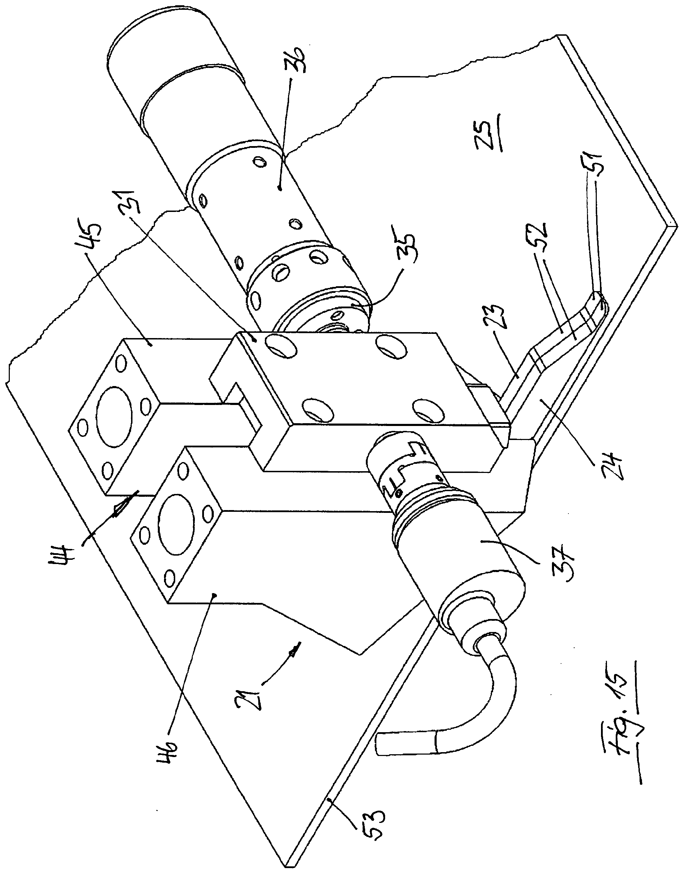

Zum Verschließen der Mündung 22 ist ein Schieber 29 vorgesehen, welcher auswechselbar zwischen einer parallel zur Drehachse 22 verlaufenden Wand 30 und einem abnehmbaren Gegenhalter 31 angeordnet ist, welcher mit dem Körper der Düse 21 verschraubt ist. Zwischen der Wand 30 und dem Gegenhalter 31 ist der Schieber 29 parallel zur Drehachse 22 in deren Richtung verschiebbar geführt. Um ihn verschieben zu können, ist er mit einer Verzahnung 32 versehen, welche mit einem Ritzel 33 kämmt, welches auf einer Welle 34 sitzt, welche den Gegenhalter 31 durchquert. Auf der Welle 34 sitzt eine Scheibe 35, an welcher ein Servomotor 36 angebracht werden kann, welcher beispielsweise in Figur 15 dargestellt ist. Der Servomotor 36 treibt die Welle 34 und mit ihr das Ritzel 33 an. Am anderen Ende der Welle 34, auf der der Scheibe 35 abgewandten Seite der Düse 21 kann ein inkrementaler Drehwinkelgeber 37 angebracht werden, welcher z. B. in Figur 15 dargestellt ist und die Stellung des Schiebers 29 überwacht und ein Eingangssignal für die Steuerung des Servomotors 36 liefert.

Die Düse 21 hat an ihrer Oberseite einen Anschluss 38 für die erste Dichtmasse 3 und einen Anschluss 39 für die zweite Dichtmasse 4. Von den Anschlüssen 38 und 39 führen zwei Kanäle 40 und 41, welche durch eine Trennwand 42 voneinander getrennt sind, zur Mündung 22. Die Trennwand 42 endet kurz vor der Mündung 22, so dass die beiden Teilstränge 23 und 24 auf dem verbleibenden Weg bis zur Mündung 22 noch zu einem im Querschnitt rechteckigen Verbundstrang 26 zusammengeführt werden.

Dadurch, dass der Boden 28 der Düse 21 schräg zur Drehachse 27 verläuft und die Düse 21 relativ zur Glastafel 25 so orientiert wird, dass die Drehachse 27 senkrecht auf der Glastafel 25 steht, verläuft der Boden 28 auch schräg zur Glastafel 25, an welche die Düse 21 vor Beginn des Extrusionsvorganges angelegt wird.

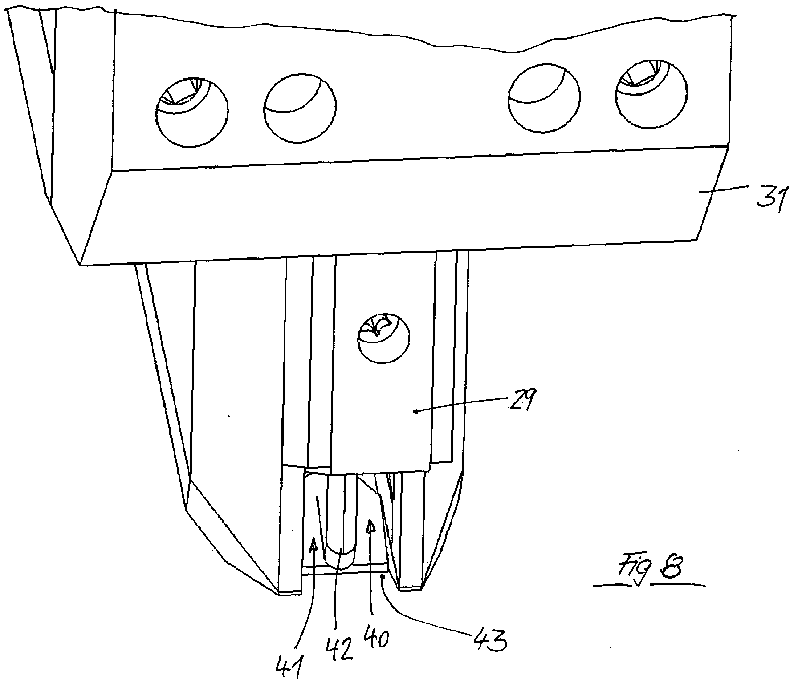

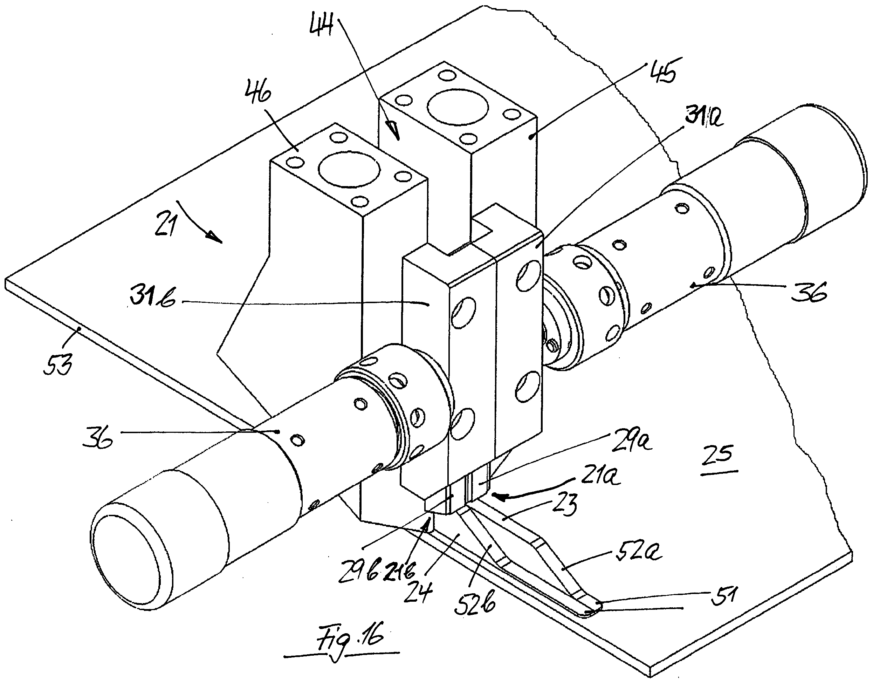

Wie man insbesondere anhand der Figuren 4 und 8 sieht, endet der Boden 28 ein wenig vor der Austrittsebene der Mündung 22, in welcher die Drehachse 27 liegt, so dass auch bei vollständig abgesenktem Schieber 29 noch eine kleine Öffnung 43 vorhanden ist, welche direkt gegen die Glastafel 25 gerichtet ist. Diese Öffnung 43 dient dazu, am Beginn des Extrusionsvorganges, vor dem Öffnen des Schiebers 29, bereits einen Film aus den Dichtmassen 3 und 4 auf die Glastafel 25 zu legen, was anhand der Figuren 15 und 16 noch näher erläutert werden wird.

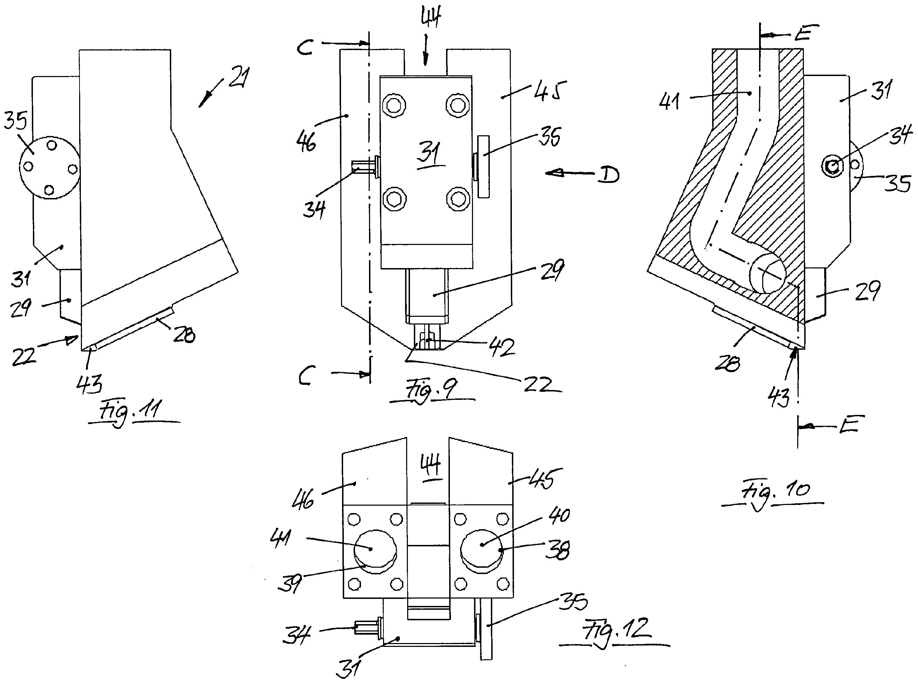

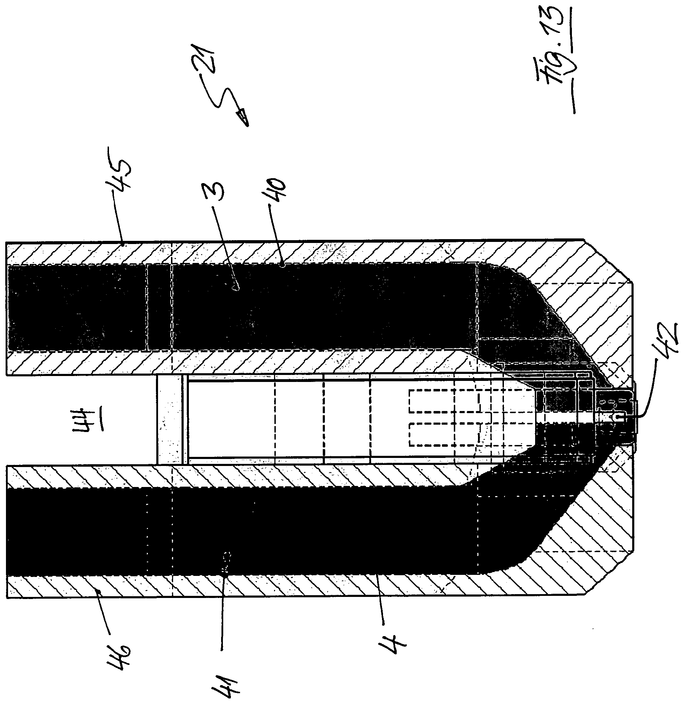

Das in den Figuren 9 bis 15 dargestellte Ausführungsbeispiel unterscheidet sich von dem in den Figuren 2 bis 8 dargestellten Ausführungsbeispiel darin, dass die Anschlüsse 38 und 39 auf zwei durch einen Luftzwischenraum 44 voneinander getrennten Blöcken 45 und 46 der Düse 21 liegen. In diesen Blöcken 45 und 46 verlaufen die Kanäle 40 und 41 für die erste Dichtmasse 3 und für die zweite Dichtmasse 4 auf dem größten Teil ihrer Länge. Erst kurz vor der Mündung 22 werden die beiden Kanäle 40 und 41 zusammengeführt, wie in den Figuren 10 und 13 dargestellt. Durch den Luftzwischenraum 44 zwischen den beiden Blöcken 45 und 46 sind die Kanäle 40 und 41 thermisch weitgehend gegeneinander isoliert, so dass unterschiedliche Verarbeitungstemperaturen, welche die beiden Dichtmassen 3 und 4 haben mögen, bis zu der Stelle, wo die beiden Kanäle 40 und 41 zusammentreffen, weitgehend beibehalten werden können. Im Übrigen entspricht das in den Figuren 9 bis 15 dargestellte Ausführungsbeispiel dem in den Figuren 2 bis 8 dargestellten Ausführungsbeispiel.

Figur 15 zeigt die Düse 21 während des Extrusionsvorganges. Mit der Düse 21 wird wie folgt gearbeitet:
Auf die Glastafel 25, welche sich z. B. in waagerechter Lage befindet, wird die Düse 21 so abgesenkt, dass sich die Mündung 22 dicht am Rand der Glastafel 25, aber in einigem Abstand von einer Ecke der Glastafel 25 befindet. Beim Anlegen der Düse 21 an die Glastafel 25 befindet sich der Schieber 29 zunächst in seiner Schließstellung. Die Düse 21 wird dann parallel zum Rand 44 der Glastafel 25 an diesem entlang bewegt, und zwar in einer zur Mündung 22 entgegengesetzten Richtung. Dabei werden der Düse 21 durch die Zahnradpumpen 15 und 16 die erste Dichtmasse 3 und die zweite Dichtmasse 4 zugeführt. In einer ersten Phase der Bewegung befindet sich der Schieber 29 noch in seiner Schließstellung. In dieser Phase können die Dichtmassen 3 und 4 nur aus der kleinen, nach unten gerichteten Öffnung 43 der Düse 21 austreten, so dass in dieser ersten Phase auf der Glastafel 25 nur ein dünner Film 41 erzeugt wird, der nur 1 cm oder 2 cm lang zu sein braucht. In einer daran anschließenden zweiten Phase wird der Schieber 29 stetig, vorzugsweise mit gleichbleibender Geschwindigkeit, bis zum Erreichen der Solldicke D des Verbundstranges 26 geöffnet. In dieser zweiten Phase nimmt die Dicke des Verbundstranges entsprechend stetig, unter Ausbildung einer Rampe 52, bis zum Erreichen der Solldicke D zu. Diese Rampe 52 erstreckt sich über eine vorgegebene Strecke L.

Die Düse 21 wird nun parallel zur Glastafel 25 längs deren Randes um sie herum geführt und legt dabei einen Verbundstrang 26 von gleichbleibendem Querschnitt und gleichbleibender Dicke D auf der Glastafel 25 ab. An den Ecken der Glastafel 25 wird die Düse 21 jeweils um ihre Drehachse 27 gedreht, und zwar um einen Winkel, welcher mit dem Winkel der Ecke übereinstimmt. Der Winkel ist meistens ein rechter Winkel. Die Düse 21 kann aber auch an einem beliebig gekrümmten Rand einer Glastafel 25 entlang bewegt werden, wobei die Düse 21 dann in Abhängigkeit von der Krümmung gedreht wird.

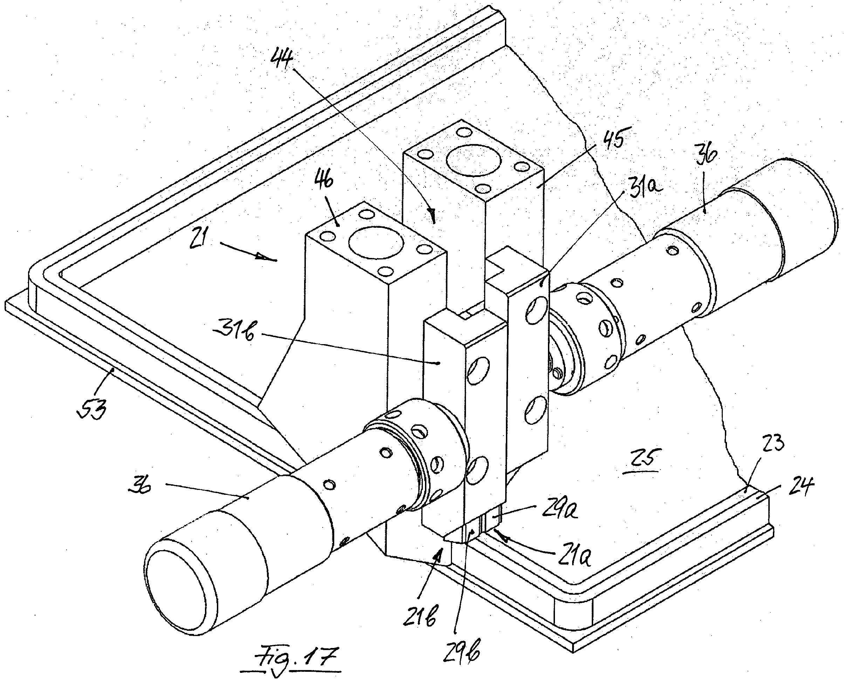

Schließlich nähert sich die Düse 21 wieder ihrer Ausgangslage. Sie wird unverändert weiter bewegt, bis sie mit ihrer Unterkante 47 das untere Ende der Rampe 52 erreicht. Wegen des schrägen Verlaufs des Bodens 28 der Düse 21, dessen Winkel etwas größer gewählt ist als der Winkel, mit welchem die Rampe 52 ansteigt, kommt es nicht zu einer flächigen Berührung der Endwand 28 mit der Rampe 52. Im weiteren Verlauf der Bewegung der Düse 21 wird die Düse nun kontrolliert so von der Glastafel 25 abgehoben, dass sich ihre Unterkante 47 längs der Rampe 52 bewegt. Gleichzeitig und synchron dazu wird der Schieber 26 stetig vorgeschoben; er verschließt die Mündung 22, wenn die Unterkante 47 der Düse 21 das obere Ende der Rampe 52 erreicht hat. Auf diese Weise wird ein keilförmiger Endabschnitt 48 des Verbundstrangs 26 gebildet, welcher komplementär zur Rampe 52 gestaltet ist und auf der Rampe 52 liegt, siehe Figur 17. Mit dem Schließen des Schiebers 29 werden auch die Zahnradpumpen 15 und 16 stillgesetzt und die Düse 21 wird von dem gebildeten Verbundstrang 26 abgehoben.

Das Erzeugen des Verbundstranges 26 auf der Glastafel 25 kann automatisch erfolgen, beispielsweise programmgesteuert, wenn das Steuerungsprogramm die Gestalt der Glastafel aus einer Fertigungsplanung kennt, oder durch Sensoren gesteuert, welche während des Extrusionsvorganges die Kontur der Glastafel 25 abtasten.

Da die beiden Dichtmassen 3 und 4 noch in der Düse 21 zusammengeführt werden, tritt aus der Mündung 22 der Düse 21 bereits ein Verbundstrang 26 aus, in welchem die beiden Teilstränge 23 und 24 über ihre gesamte Dicke flächig miteinander verbunden sind.

Die Arbeitsweise der Düse 21 des Ausführungsbeispiels in den Figuren 2 bis 8 gleicht der vorstehend beschriebenen Arbeitsweise.

Das in den Figuren 16 bis 19 dargestellte Ausführungsbeispiel unterscheidet sich von dem in Figur 15 dargestellten Ausführungsbeispiel darin, dass ein Düsenpaar 21 vorgesehen ist, welches zwei relativ zueinander senkrecht zur Glastafel 25 verschiebbare Düsen 21 a und 21 b aufweist, von welchen jede einen Schieber 29a und 29b hat, welche getrennt verstellbar sind, so dass die Bildung der Teilstränge 23 und 24 getrennt voneinander steuerbar ist, z. B. so, wie es in Figur 16 dargestellt ist: Der Extrusionsprozess beginnt wie in dem Beispiel gemäß Figur 15 damit, dass mit den Schiebern 29a und 29b in ihrer Geschlossenstellung ein Film 51 aus den beiden Dichtmassen 3 und 4 auf der Glastafel 25 gebildet wird. In der Folge wird dann jedoch der Schieber 29b später in seine Offenstellung bewegt als der Schieber 29a, so dass eine erste Rampe 52a aus der ersten Dichtmasse 3 und eine zweite Rampe 52b aus der zweiten Dichtmasse 4 gebildet wird, wobei die beiden Rampen 52a und 52b gegeneinander versetzt sind. Entsprechend wird in der letzten Phase des Extrusionsvorganges der Schieber 29a früher geschlossen als der Schieber 29b, wobei für jeden der Teilstränge 23 und 24 die Bewegung des zugehörigen Schiebers 29a bzw. 29b komplementär zur Lage und Gestalt der Rampen 52a und 52b mit jeweils einem eigenen Servomotor 36 so erfolgt, wie es für den Verbundstrang 26 in Figur 15 bereits beschrieben ist.

Zuerst erreicht die Düse 21a die Rampe 52a ihres Teilstrangs 23, bewegt sich an der Rampe 52a entlang, wobei sie sich fortschreitend von der Glastafel 25 entfernt und der Schieber 29a die Düse 21 a fortschreitend schließt, bis der Schieber 29a mit Erreichen des oberen Endes der Rampe 52a durch die Düse 21 a seine Geschlossenstellung erreicht hat und die Düse 21a sich vom Teilstrang 23 löst. Dieser Moment ist in Figur 17 dargestellt.

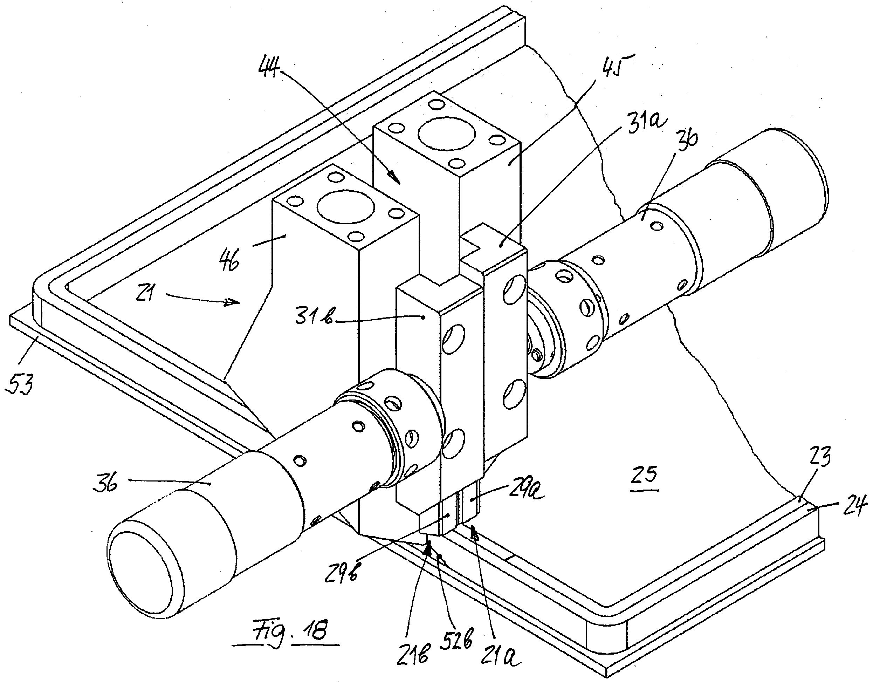

Anschließend erreicht die zweite Düse 21 b die Rampe 52b des zweiten Teilstrangs 24 und bewegt sich unter fortschreitendem Schließen des Schiebers 29b an die Rampe 52b entlang. Das ist in Figur 18 dargestellt.

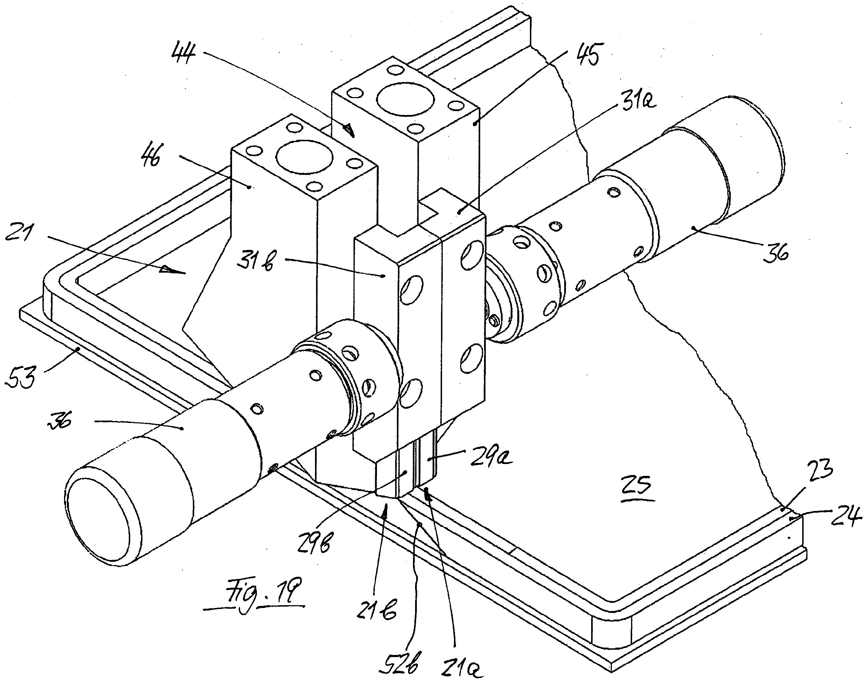

Schließlich erreicht die zweite Düse 21 b das obere Ende der Rampe 52b und zugleich erreicht ihr Schieber 29b seine Geschlossenstellung und die zweite Düse 21 b löst sich vom Teilstrang 24. Dieser Zeitpunkt ist in Figur 19 dargestellt.

Erreichen die Schieber 29a und 29b ihre Geschlossenstellung, wird die Zufuhr der Dichtmasse 3 bzw. 4 zur jeweiligen Düse 21 a bzw. 21 b durch Stillsetzen der Zahnradpumpen 15 und 16 (siehe Figur 1) unterbrochen.

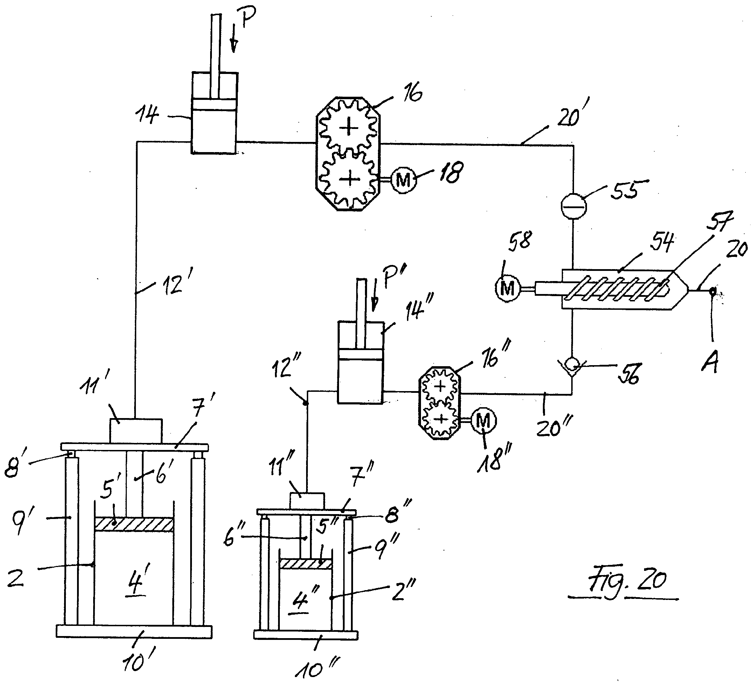

In dem in Figur 1 dargestellten Beispiel sind beide Dichtmassen 3 und 4 als einkomponentig angenommen. Es ist jedoch auch möglich, z. B. für die Dichtmasse, welche den festen Verbund der Glastafeln in der Isolierglasscheibe bewirken soll, einen Zweikomponentenkleber wie z. B. ein Thiokol zu verwenden. Die zwei Komponenten einer zweikomponentigen Dichtmasse müssen miteinander vermischt werden, bevor sie der Düse 21 oder einer der beiden Düsen 21a oder 21b zugeführt werden. Es sei angenommen, dass anstelle der einkomponentigen Dichtmasse 4 eine zweikomponentige Dichtmasse verarbeitet werden soll, die aus den beiden Komponenten 4' und 4" gebildet wird. Dann wäre in Figur 1 der Teil der Vorrichtung vom Gebinde 2 bis zu einem Anschlusspunkt A, welcher zwischen der Zahnradpumpe 16 und der Düse 21 liegt, zu ersetzen durch die in Figur 20 dargestellte Vorrichtung.

Figur 20 zeigt ein Gebinde 2, welches eine Komponente 4' enthält und mittels einer Fasspumpe, welche aus denselben Komponenten besteht wie die Fasspumpe für das Gebinde 2 in Figur 1, aus dem Gebinde 2 in einen Zwischenspeicher 14 gefördert wird, welcher unter einem Vordruck P steht. In entsprechender Weise befindet sich die zweite Komponente 4" für die Zweikomponenten-Dichtmasse in einem Gebinde 2", aus welcher sie mit einer Fasspumpe durch eine Leitung 12" in einen Zwischenspeicher 14" gefördert wird, in welchem sie unter einem Vordruck P" steht. Die Fasspumpe für das Gebinde 2" ist in gleicher Weise aufgebaut wie die für das Gebinde 2 und ist deshalb mit entsprechenden, mit zwei Strichen versehenen Bezugszahlen bezeichnet.

Die erste Komponente 4' wird aus dem Zwischenspeicher 14 mittels einer Zahnradpumpe 16, die durch einen Motor 18 angetrieben wird, durch eine Leitung 20', in welcher ein Absperrschieber 55 vorgesehen ist, einem Mischer 54 zugeführt. Die zweite Komponente 4" wird mittels einer Zahnradpumpe 16", welche durch einen Motor 18" angetrieben ist, durch eine Leitung 20", in welcher ein Rückschlagventil 56 liegt, in den Mischer 54 gepumpt. Der Mischer 54 ist vorzugsweise ein dynamischer Mischer, in welchem ein Mischorgan 57, welches durch einen Motor 58 angetrieben ist, die beiden Komponenten 4' und 4" miteinander vermischt. Der Mischer 54 entlässt die durch das Mischen entstandene Zweikomponenten-Dichtmasse in die Leitung 20, welche zur Düse 21 führt. Der in Figur 20 bezeichnete Anschlusspunkt A stimmt mit dem Anschlusspunkt A in Figur 1 überein.

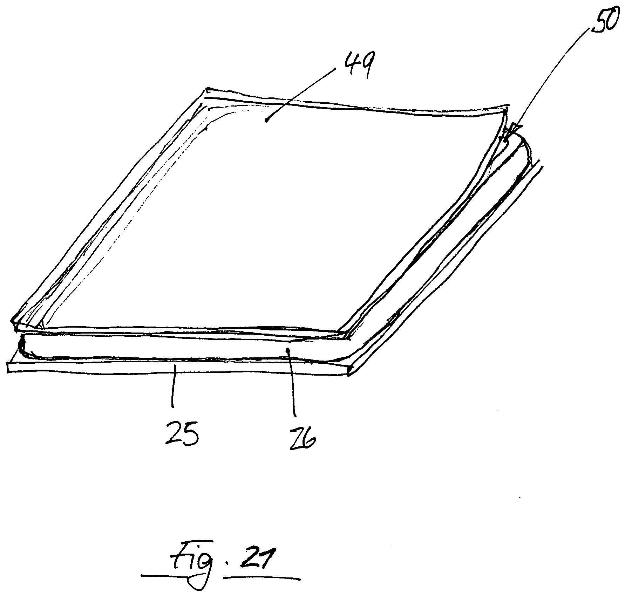

Figur 21 dient der Erläuterung des Zusammenbauvorgangs der Isolierglasscheibe. Dazu wird eine zweite Glastafel 49 mit dem Verbundstrang 26 verklebt. Zuvor wird jedoch die zweite Glastafel 49 an einer Ecke von der ersten Glastafel 25 weggebogen, wodurch im Bereich dieser Ecke eine Öffnung 50 zur Entlüftung der Isolierglasscheibe geschaffen wird. Diese Öffnung 50 wird erst nach dem Verpressen der Isolierglasscheibe auf den Sollabstand der beiden Glastafeln 25 und 49 geschlossen.

### Bezugszeichen

- 1: erstes Gebinde
- 2: zweites Gebinde
- 2': Gebinde
- 3: erste Dichtmasse
- 4: zweite Dichtmasse
- 4': Komponente
- 4": zweite Komponente
- 5: Folgeplatte
- 6: Stange
- 7: Traverse
- 8: zwei Kolbenstangen
- 9: zwei hydraulische Zylinder
- 10: Bodenplatte
- 11: Pumpe
- 11': Fasspumpe
- 12: Leitung
- 12': Leitung
- 12": Leitung
- 13: Zwischenspeicher
- 14: Zwischenspeicher
- 14": Zwischenspeicher
- 15: Zahnradpumpe
- 16: zweite Zahnradpumpe
- 16: Zahnradpumpe
- 17: Elektromotor
- 18: Elektromotor
- 18": Motor
- 19: Leitung
- 20: Leitung
- 20': Leitung
- 20": Leitung
- 21: Düse oder Düsenpaar
- 21a: erste Düse
- 21b: zweite Düse
- 22: Mündung
- 23: Teilstrang
- 24: Teilstrang
- 25: Glastafel
- 26: Verbundstrang
- 27: Drehachse
- 28: Boden
- 29: Schieber
- 29a: Schieber
- 29b: Schieber
- 30: Wand
- 31: Gegenhalter
- 31a: Gegenhalter
- 31b: Gegenhalter
- 32: Verzahnung
- 33: Ritzel
- 34: Welle
- 35: Scheibe
- 36: Servomotor
- 37: Drehwinkelgeber
- 38: Anschluss für 3
- 39: Anschluss für 4
- 40: Kanal
- 41: Kanal
- 42: Trennwand
- 43: Öffnung
- 44: Luftzwischenraum
- 45: Block
- 46: Block
- 47: Unterkante
- 48: Endabschnitt
- 49: Glastafel
- 50: Öffnung
- 51: Film
- 52: Rampe
- 52a: erste Rampe
- 52b: zweite Rampe
- 53: Rand von 25
- 54: Mischer
- 55: Absperrschieber
- 56: Rückschlagventil
- 57: Mischorgan
- 58: Motor
- A: Anschlusspunkt
- P: Vordruck
- P': Vordruck
- P": Vordruck
- D: Solldicke
- L: Strecke

## Patentansprüche

1. Verfahren zum Herstellen einer Isolierglasscheibe mit einem plastischen Abstandhalter, in welcher zwei zueinander parallele Glastafeln (25, 49) einen Sollabstand von einander haben, durch
• Bilden eines Verbundstranges (26) - vor dem Zusammenfügen der beiden Glastafeln (25, 49) - durch zeitlich und räumlich überlappendes Extrudieren von wenigstens zwei plastischen Teilsträngen (23, 24), von welchen ein erster Teilstrang (23) aus einer klebenden ersten Dichtmasse (3), in welche eine Feuchtigkeit bindende Substanz eingelagert ist, und ein zweiter Teilstrang (24) aus einer klebenden und abbindenden zweiten Dichtmasse (4) besteht, auf eine erste Glastafel (25) entlang des Randes der Glastafel (25), und zwar in der Weise
dass Anfang und Ende des Verbundstrangs (26) zusammenstoßen und
dadurch einen Rahmen bilden,
dass die Teilstränge (23, 24) in dem Verbundstrang (26) nebeneinander liegen und dabei unmittelbar aneinander anschließen, und
dass der erste Teilstrang (23) innerhalb des von dem zweiten Teilstrang (24) gebildeten Rahmens liegt,
• nach dem Extrudieren des Verbundstrangs (26) auf die erste Glastafel (25), Zusammenfügen der ersten Glastafel (25) mit der zweiten Glastafel (49) so, dass der Verbundstrang (26) zwischen den beiden Glastafeln (25, 49) liegt, sie miteinander verbindet und auf Abstand voneinander hält, und
• Einstellen des Sollabstandes durch Pressen der zusammengefügten Glastafeln (25,49), **dadurch gekennzeichnet dass** eine Düse (21) mit veränderbarem Mündungsquerschnitt verwendet wird, um den ersten Teilstrang (23) mit einer vorgegebenen erste Solldicke, welche größer ist als der Sollabstand, und den zweiten Teilstrang (24) mit einer vorgegebenen zweiten Solldicke, welche größer ist als der Sollabstand, auf die erste Glastafel zu extrudieren.

2. Verfahren nach Anspruch 1, **dadurch gekennzeichnet, dass** zwischen dem ersten Teilstrang (23) und dem zweiten Teilstrang (24) eine Diffusionsbarriere eingefügt wird.

3. Verfahren nach Anspruch 2, **dadurch gekennzeichnet, dass** die Diffusionsbarriere dadurch gebildet wird, dass zwischen dem ersten Teilstrang (23) und dem zweiten Teilstrang (24) durch Koextrusion ein dritter Teilstrang aus einer dritten plastischen Masse gebildet wird, welche sowohl mit der ersten plastischen Dichtmasse (3) als auch mit der zweiten plastischen Dichtmasse (4) kompatibel ist.

4. Verfahren nach einem der vorstehenden Ansprüche, **dadurch gekennzeichnet, dass** als erste plastische Dichtmasse (3) eine Mischung verwendet wird, die als Hauptbestandteil ein Polyisobutylen und als Nebenbestandteil mehr als 30 Gew.-% einer reaktiven Masse aufweist.

5. Verfahren nach Anspruch 1, **dadurch gekennzeichnet, dass** als zweite plastische Dichtmasse (4) ein reaktiver Schmelzklebstoff auf Butylbasis verwendet wird.

6. Verfahren nach einem der vorstehenden Ansprüche, **dadurch gekennzeichnet, dass** eine der beiden Glastafeln (49) vor dem Zusammenfügen an einer Ecke von der gegenüberliegenden anderen Glastafel (25) weg gebogen wird, beim Zusammenfügen und Pressen gebogen bleibt und die Biegung erst rückgängig gemacht wird, wenn die beiden Glastafeln (25, 49) abseits des gebogenen Bereichs ihren Sollabstand erreicht haben.

7. Verfahren nach einem der vorstehenden Ansprüche, **dadurch gekennzeichnet, dass** für das Extrudieren der Teilstränge (23, 24) mehrere Düsen vorgesehen sind, welche gemeinsam relativ zu der ersten Glastafel (25) bewegt werden.

8. Verfahren nach Anspruch 7, **dadurch gekennzeichnet, dass** die Düsen auf einem gemeinsamen Träger relativ zu der ersten Glastafel (25) bewegt werden.

9. Verfahren nach einem der Ansprüche 1 bis 6, **dadurch gekennzeichnet, dass** die Teilstränge (23, 24) mittels einer Mehrfachdüse (21) extrudiert werden, welche Anschlüsse (38, 39) für unterschiedliche plastische Massen (3, 4) und mehrere nebeneinander liegende Mündungen hat, welche durch voneinander getrennte Kanäle (40, 41) mit jeweils einem der Anschlüsse (38, 39) verbunden sind.

10. Verfahren nach Anspruch 9, in welchem eine Mehrfachdüse (21) verwendet wird, in welcher Maßnahmen (44) getroffen sind, um den Wärmeübergang zwischen den Kanälen (40, 41), die von den Anschlüssen (38, 39) zu der Mündung (22) bzw. zu den Mündungen führen, zu erschweren.

11. Verfahren nach einem der vorstehenden Ansprüche, **dadurch gekennzeichnet, dass** die Teilstränge (23, 24) mittels einer Mehrfachdüse (21) extrudiert werden, welche Anschlüsse (38, 39) für unterschiedliche plastische Massen (3, 4) und nur eine einzige Mündung (22) hat, welche durch getrennte Kanäle (40, 41), die sich erst kurz vor der Mündung (22) miteinander vereinigen, mit den Anschlüssen (38, 39) verbunden sind,
und dass in der Mehrfachdüse (21) Maßnahmen getroffen sind, um den Wärmeübergang zwischen den Kanälen (40, 41), die von den Anschlüssen (38, 39) zu der Mündung (22) bzw. zu den Mündungen führen, zu erschweren.

12. Verfahren nach einem der vorstehenden Ansprüche, in welchem der Mündungsquerschnitt der Düse (21) bzw. Mehrfachdüse in einer Zeitspanne am Anfang des Extrusionsvorganges und in einer Zeitspanne am Ende des Extrusionsvorganges so gesteuert wird, dass die Dicke des aus der Düse (21) bzw. Mehrfachdüse austretenden Verbundstrangs (26) bzw. seiner Teilstränge (23, 24) am Anfang auf einer Strecke (L) von Null oder von einer minimalen Dicke ausgehend auf die Solldicke (D) gesteigert und komplementär dazu am Ende des Extrusionsvorgangs auf derselben Strecke (L) von der Solldicke (D) auf Null verringert wird, sodass sich Anfang und Ende der Verbundstranges (26) bzw. der Teilstränge (23, 24) auf dieser Strecke (L) überlappen.

13. Verfahren nach Anspruch 12, **dadurch gekennzeichnet, dass** mit der Düse (21) bzw. mit der Mehrfachdüse zunächst ein Film (51) aus der jeweiligen plastischen Masse (3, 4) auf die erste Glastafel (25) aufgetragen wird, bevor die Dicke des aus der Düse (21) bzw. Mehrfachdüse austretenden Verbundstranges (26) bzw. der Teilstränge (23, 24) gemäß Anspruch 12 auf die Solldicke (D) gesteigert wird.

14. Verfahren nach Anspruch 12 oder 13, **dadurch gekennzeichnet, dass** die Strecken (L), auf welchen sich Anfang und Ende der Teilstränge (23, 24) überlappen, in Längsrichtung des Verbundstranges (26) gegeneinander versetzt sind.

15. Verfahren nach Anspruch 12 und 13, **dadurch gekennzeichnet, dass** der Anfang der Filme (51) aus den plastischen Massen (3, 4) der Teilstränge (23, 24) an die gleiche Stelle am Umfang der Glastafel (25) gelegt wird.

16. Verfahren nach einem der vorstehenden Ansprüche, **dadurch gekennzeichnet, dass** die Teilstränge (23, 24) auf die erste Glastafel (23) extrudiert werden, während diese waagerecht liegt.

17. Verfahren nach einem der vorstehenden Ansprüche, **dadurch gekennzeichnet, dass** der Verbundstrang (26) bzw. seine Teilstränge (23, 24) so auf die erste Glastafel (25) aufgetragen werden, dass der Verbundstrang (26), jedenfalls außerhalb von Eckenbereichen der ersten Glastafel (25), bündig mit dem Rand (53) der ersten Glastafel (25) abschließt.

18. Düse zur Verwendung in einem Verfahren nach einem der vorstehenden Ansprüche, mit einem Düsenkörper mit zwei oder drei Anschlüssen (38, 39) für zwei oder drei plastische Massen (3, 4),
**gekennzeichnet durch**
eine einzige Mündung (22), welche **durch** Schieber (29a, 29b) verschlossen und mit veränderbarem Öffnungsquerschnitt geöffnet werden kann, und **durch** zwei bzw. drei Kanäle (40, 41), welche die Anschlüsse (38, 39) mit der Mündung (22) verbinden und sich kurz vor der Mündung (22) vereinigen, und dass zum Verändern des Mündungsquerschnitts zwei oder drei Schieber (29a, 29b) unmittelbar nebeneinander vor der Mündung (22) angeordnet und unabhängig voneinander verstellbar sind.

## Claims

1. A method for producing an insulating glass pane comprising a plastic spacer, wherein two glass panels (25, 49) that are parallel to each other have a target distance from each other, by
• forming a composite strand (26) - before joining the two glass panels (25, 49) - by temporally and spatially overlapping extrusion of at least two plastic partial strands (23, 24), wherein a first partial strand (23) is made of an adhesive first sealing compound (3), in which a moisture-binding substance is embedded, and a second partial strand (24) consists of an adhesive and setting second sealing compound (4), onto a first glass panel (25) along the edge of the glass panel (25), namely such
that the beginning and the end of the composite strand (26) abut and thereby form a frame,
that the partial strands (23, 24) are located side by side in the composite strand (26) and thus directly adjoin each other, and
that the first partial strand (23) is located within the frame formed by the second partial strand (24),
• after extruding the composite stand (25) onto the first glass panal (25), joining the first glass panel (25) to the second glass panel (49), so that the composite strand (26) is located between the two glass panels (25, 49), connects them to each other and holds them at a distance from each other, and
• adjusting the target distance by pressing the joined glass panels (25, 49), **characterized in that** a nozzle (21) having a variable orifice cross section is used for extruding onto the first glass panel (25) the first partial strand (23) with a predetermined first target thickness, which is greater than the target distance, and the second partial strand (24) with a predetermined second target thickness, which is greater than the target distance.

2. The method according to claim 1, **characterized in that** a diffusion barrier is inserted between the first partial strand (23) and the second partial strand (24).

3. The method according to claim 2, **characterized in that** the diffusion barrier is formed **in that** a third partial strand made of a third plastic compound, which is compatible with the first plastic compound (3) as well as with the second plastic compound (4), is formed between the first partial strand (23) and the second partial strand (24) by means of coextrusion.

4. The method according to any one of the preceding claims, **characterized in that** a mixture, which comprises a polyisobutylene as main component and more than 30% by weight of a reactive compound as an additional component, is used as first plastic sealing compound (3).

5. The method according to claim 1, **characterized in that** a reactive hotmelt adhesive based on butyl is used as second plastic sealing compound (3).

6. The method according to any one of the preceding claims, **characterized in that** prior to the joining, one of the two glass panels (49) is bent away at a corner from the other glass panel (25) located opposite thereto, remains bent during the joining and pressing, and the bending is reversed only when the two glass panels (25, 49) have reached their target distance away from the bent area.

7. The method according to any one of the preceding claims, **characterized in that** provision is made for a plurality of nozzles, which are moved together relative to the first glass panel (25), for the extrusion of the partial strands (23, 24).

8. The method according to claim 7, **characterized in that** the nozzles are moved on a common support relative to the first glass panel (25).

9. The method according to any one of claims 1 to 6, **characterized in that** the partial strands (23, 24) are extruded by means of a multiple nozzle (21), which has ports (38, 39) for different plastic compounds (3, 4) and a plurality of orifices located next to each other, which are in each case connected to one of the ports (38, 39) by means of channels (40, 41), which are separated from each other.

10. The method according to claim 9, wherein a multiple nozzle (21) is used, in which measures (44) are taken to impede heat transfer between the channels (40, 41) leading from the ports (38, 39) to the orifice (22) or to the orifices, respectively.

11. The method according to any of the preceding claims, **characterized in that** the partial strands (23, 24) are extruded by means of a multiple nozzle (21), which has ports (38, 39) for different plastic compounds (3, 4) and only a single orifice (22), which is connected to the ports (38, 39) by means of separate channels (40, 41), which join each other only shortly in front of the orifice (22),
and **in that**, in the multiple nozzle (21), measures (44) are taken to impede heat transfer between the channels (40, 41) leading from the ports (38, 39) to the orifice (22) or to the orifices (22), respectively.

12. The method according to any one of the preceding claims, wherein the orifice cross section of the nozzle (21) or multiple nozzles, respectively, is controlled in a time interval at the beginning of the extrusion process and in a time interval at the end of the extrusion process such that the thickness of the composite strand (26) or of its partial strands (23, 24), respectively, emerging from the nozzle (21) or from the multiple nozzles, respectively, is increased to the target thickness (D) at the beginning on a path (L) starting with zero or starting with a minimum thickness and is reduced complementary thereto at the end of the extrusion process on the same path (L) from the target thickness (D) to zero, so that the beginning and the end of the composite strand (26) or of the partial strands (23, 24), respectively, overlap on this path (L).

13. The method according to claim 12, **characterized in that** a film (51) made of the respective plastic compound (3, 4) is initially applied to the first glass panel (25) by means of the nozzle (21) or by means of the multiple nozzle, respectively, before the thickness of the composite strand (26) or of the partial strands (23, 24), respectively, which emerge from the nozzle (21) or multiple nozzle, respectively, is increased to the target thickness (D) according to claim 12.

14. The method according to claim 12 or 13, **characterized in that** the paths (L), on which the beginning and end of the partial strands (23, 24) overlap, are offset against each other in longitudinal direction of the composite strand (26).

15. The method according to claim 12 and 13, **characterized in that** the beginning of the films (51) made of the plastic compounds (3, 4) of the partial strands (23, 24) is placed at the same location at the periphery of the glass panel (25).

16. The method according to any one of the preceding claims, **characterized in that** the partial strands (23, 24) are extruded on the first glass panel (23), while it lies horizontally.

17. The method according to any one of the preceding claims, **characterized in that** the composite strand (26) or its partial strands (23, 24), respectively, are applied to the first glass panel (25) such that the composite strand (26) is flush with the edge (53) of the first glass panel (25), at least outside of corner areas of the first glass panel (25).

18. A nozzle for use in a method according to any one of the preceding claims, having a nozzle body comprising two or three ports (38, 39) for two or three plastic compounds (3, 4),
**characterized by**
a single orifice (22), which can be closed by means of sliders (29a, 29b) and which can be opened with variable opening cross section, and by two or three channels (40, 41), respectively, which connect the ports (38, 39) to the orifice (22) and join shortly in front of the orifice (22) and in that two or three sliders (29a, 29b) are arranged directly next to each other in front of the orifice (22) and which can be adjusted independent on each other, for varying the orifice cross section.

## Revendications

1. Procédé de fabrication d'une vitre isolante avec un écarteur plastique, dans laquelle deux plaques de verre (25, 49) parallèles l'une à l'autre ont un écartement souhaité l'une par rapport à l'autre, par
• la formation d'un cordon composite (26), avant l'assemblage des deux plaques de verre (25, 49), par extrusion d'au moins deux cordons partiels (23, 24) plastiques se recouvrant par moment et par endroits, parmi lesquels un premier cordon partiel (23) est constitué d'un premier matériau d'étanchéité (3) adhésif, dans lequel est logée une substance absorbant l'humidité, et un deuxième cordon partiel (24) est constitué d'un deuxième matériau d'étanchéité (4) adhésif et liant, sur une première plaque de verre (25) le long du bord de la plaque de verre (25), et en l'occurrence d'une telle manière
que le début et la fin du cordon composite (26) butent l'un contre l'autre et forment ainsi un cadre,
que les cordons partiels (23, 24) se situent l'un à côté de l'autre dans le cordon composite (26) et s'enchaînent ainsi immédiatement les uns à la suite des autres, et
que le premier cordon partiel (23) se situe à l'intérieur du cadre formé par le deuxième cordon partiel (24),
• après l'extrusion du cordon composite (26) sur la première plaque de verre (25), l'assemblage de la première plaque de verre (25) avec la deuxième plaque de verre (49) de sorte que le cordon composite (26) se situe entre les deux plaques de verre (25, 49), les relie et les maintient avec un écart l'une par rapport à l'autre, et
• le réglage de l'écartement souhaité par la compression des plaques de verre (25, 49) assemblées, **caractérisé en ce qu'**une buse (21) avec une section transversale d'embout variable est employée afin d'extruder sur la première plaque de verre le premier cordon partiel (23) avec une première épaisseur souhaitée prédéfinie, laquelle est supérieure à l'écartement souhaité, et le deuxième cordon partiel (24) avec une deuxième épaisseur souhaitée prédéfinie, laquelle est supérieure à l'écartement souhaité.

2. Procédé selon la revendication 1, **caractérisé en ce qu'**une barrière de diffusion est insérée entre le premier cordon partiel (23) et le deuxième cordon partiel (24).

3. Procédé selon la revendication 2, **caractérisé en ce que** la barrière de diffusion est formée par le fait qu'un troisième cordon partiel constitué d'un troisième matériau plastique est formé par co-extrusion entre le premier cordon partiel (23) et le deuxième cordon partiel (24), lequel est compatible à la fois avec le premier matériau d'étanchéité (3) plastique et le deuxième matériau d'étanchéité (4) plastique.

4. Procédé selon l'une des revendications précédentes, **caractérisé en ce qu'**un mélange qui présente en tant que composant principal un polyisobutylène et en tant que composant secondaire plus de 30 % en poids d'un matériau réactif est employé en tant que premier matériau d'étanchéité (3) plastique.

5. Procédé selon la revendication 1, **caractérisé en ce qu'**un adhésif fusible réactif à base de butyle est employé en tant que deuxième matériau d'étanchéité (4) plastique.

6. Procédé selon l'une des revendications précédentes, **caractérisé en ce qu'**avant l'assemblage, l'une des deux plaques de verre (49) est recourbée en s'éloignant à un coin par rapport à l'autre plaque de verre (25) située en face, reste recourbée pendant l'assemblage et la compression et que la courbure ne devient réversible que lorsque les deux plaques de verre (25, 49) ont atteint leur écartement souhaité en aval de la zone recourbée.

7. Procédé selon l'une des revendications précédentes, **caractérisé en ce que** pour l'extrusion des cordons partiels (23, 24) plusieurs buses sont prévues, lesquelles sont déplacées ensemble par rapport à une première plaque de verre (25).

8. Procédé selon la revendication 7, **caractérisé en ce que** les buses sont déplacées sur un support commun par rapport à la première plaque de verre (25).

9. Procédé selon l'une des revendications 1 à 6, **caractérisé en ce que** les cordons partiels (23, 24) sont extrudés au moyen d'une buse multiple (21) laquelle a des raccords (38, 39) pour divers matériaux plastiques (3, 4) et plusieurs embouts situés les uns à côté des autres, lesquels sont reliés par des canaux (40, 41) séparés les uns des autres avec respectivement l'un des raccords (38, 39).

10. Procédé selon la revendication 9, dans lequel une buse multiple (21) est employée, dans laquelle des mesures (44) sont prises pour rendre plus difficile le transfert thermique entre les canaux (40, 41) qui mènent des raccords (38, 39) vers l'embout (22), respectivement, vers les embouts.

11. Procédé selon l'une des revendications précédentes, **caractérisé en ce que** les cordons partiels (23, 24) sont extrudés au moyen d'une buse multiple (21), laquelle a des raccords (38, 39) pour divers matériaux plastiques (3, 4) et uniquement un seul embout (22), lesquels sont reliés avec les raccords (38, 39) par des canaux (40, 41) séparés, qui s'unissent uniquement juste avant l'embout (22),
et que des mesures sont prises dans la buse multiple (21) pour rendre plus difficile le transfert thermique entre les canaux (40, 41) qui mènent des raccords (38, 39) vers l'embout (22), respectivement vers les embouts.

12. Procédé selon l'une des revendications précédentes, dans lequel la section transversale de l'embout de la buse (21), respectivement de la buse multiple, est réglée pendant un intervalle de temps au début du processus d'extrusion et dans un intervalle de temps à la fin du processus d'extrusion de manière que l'épaisseur du cordon composite (26), respectivement des cordons partiels (23, 24), sortant de la buse (21), respectivement de la buse multiple, augmente au début d'une longueur (L) de zéro ou à partir d'une épaisseur minimale jusqu'à l'épaisseur souhaitée (D), et de manière complémentaire, est diminuée à la fin du processus d'extrusion au niveau de la même longueur (L) de l'épaisseur souhaitée (D) à zéro, de sorte que le début et la fin du cordon composite (26), respectivement des cordons parties (23, 24), se superposent sur cette longueur (L).

13. Procédé selon la revendication 12, **caractérisé en ce qu'**avec la buse (21), respectivement avec la buse multiple, tout d'abord un film (51) constitué du matériau plastique (3, 4) respectif est rapporté sur la première plaque de verre (25), avant que l'épaisseur du cordon composite (26), respectivement des cordons partiels (23, 24), sortant de la buse (21), respectivement de la buse multiple, soit augmentée jusqu'à l'épaisseur souhaitée (D) selon la revendication 12.

14. Procédé selon la revendication 12 ou 13, **caractérisé en ce que** les longueurs (L) sur lesquelles le début et la fin des cordons partiels (23, 24) se superposent sont décalées les unes par rapport aux autres dans la direction longitudinale du cordon composite (26).

15. Procédé selon la revendication 12 ou 13, **caractérisé en ce que** le début des films (51) constitués des matériaux plastiques (3, 4) des cordons partiels (23, 24) est fixé au même endroit au début de la plaque de verre (25).

16. Procédé selon l'une des revendications précédentes, **caractérisé en ce que** les cordons partiels (23, 24) sont extrudés sur la première plaque de verre (23) pendant que celle-ci se situe horizontalement.

17. Procédé selon l'une des revendications précédentes, **caractérisé en ce que** le cordon composite (26), respectivement ses cordons partiels (23, 24), sont rapportés sur la première plaque de verre (25) de telle manière que le cordon composite (26) se ferme de manière plane avec le bord (53) de la première plaque de verre (25) en tous cas en dehors des parties en coins de la première plaque de verre (25).

18. Buse pour l'utilisation dans un procédé selon l'une des revendications précédentes, avec un corps de buse avec deux ou trois raccords (38, 39) pour deux ou trois matériaux plastiques (3, 4),
**caractérisée par**
un seul embout (22), lequel est fermé par des vannes (29a, 29b) et peut être ouvert avec une section transversale d'ouverture variable, et par deux, respectivement trois canaux (40, 41), lesquels relient les raccords (38, 39) avec l'embout (22) et s'assemblent juste avant l'embout (22), et que, pour la modification de la section transversale de l'embout, deux ou trois vannes (29a, 29b) sont disposées les unes à côté des autres immédiatement avant l'embout (22) et peuvent être réglées de manière indépendante les unes des autres.
